# DEMANDE DE BREVET EUROPEEN

(11) **EP 2 305 023 A1**
(43) Date de publication de la demande: **06.04.2011**
(21) Numéro de dépôt: 10364005.8
(22) Date de dépôt: 13.09.2010
(51) Int. Cl.: A01G 13/02

(54) **Couvre-pot pour plantation**

(30) Priorité: 28.09.2009 FR 0904609
(71) Demandeur: Binde, Bernard, 56380 Saint Malo de Beignon (FR); Roussel, Segolen, 56380 Saint Malo de Beignon (FR)
(72) Inventeur: Binde, Bernard, 56380 Saint Malo de Beignon (FR)

(57) **Abrégé**

Dispositif pour recouvrir en surface la terre des pots à plantation, désigné par le terme couvre-pot.

L'invention concerne un dispositif recouvrant la terre des plantations, constituant ainsi : un barrage aux enfants, aux animaux - un effet de serre, la non-prolifération des mauvaises herbes et une protection contre le gel. La matière, les formes, les tailles, les motifs et les couleurs du couvre-pot sont illimités.

Le dispositif est constitué - d'un disque ou de toute forme géométrique : carrée, rectangulaire, triangulaire, hexagonale, ovale, très maniable, opaque ou transparent, qui vient recouvrir la terre du pot.

Il possède une coupe droite centrale formant deux parties symétriques s'ajustant ou se chevauchant en fonction du type de pot.

La coupe droite centrale est découpée de petites lamelles formant deux peignes de part et d'autre, et s'étalant jusqu'à des demi-étoiles à chaque extrémité. L'utilisateur peut donc venir coiffer la plante et enrober le tronc.

En périphérie, des lamelles juxtaposées de 1 cm sont prédécoupées sur l'envers. L'utilisateur peut les retirer pour un parfait ajustement sur le pot.

Le dispositif selon l'invention est particulièrement destiné à recouvrir la terre des pots prolongeant ainsi la durée de vie des plantations.

## Description

La présente invention concerne un dispositif pour recouvrir la terre en surface d'un pot à plantation.

La terre des plantes en pot est exposée aux enfants en bas âge et aux animaux. Plusieurs problèmes se posent en raison de cette exposition :
- Pour les enfants : prise de la terre et mise en bouche qui peut-être nocive s'il y a introduction d'engrais et de plus, les enfants se salissent.
- Pour les plantes : perte de celles-ci due aux urines d'animaux, aux grattages multiples et au déracinement de la plante.
- Salissures du lieu du dépôt de la plante en intérieur, dues aux dispersions de la terre, la terre mouillée colle après l'arrosage.
- Assèchement de la terre des plantations dû au chauffage en intérieur, au manque d'arrosage, au vent à l'extérieur.
- A l'extérieur : pousse des mauvaises herbes et gel en hiver.

Toutes ces contraintes obligent, la plupart du temps, les utilisateurs à se séparer de leurs plantes.

Le dispositif selon l'invention permet de remédier à ces problèmes.

Il s'agit d'un couvre-pot se positionnant au-dessus du pot et recouvrant la totalité de la terre, laissant passer la ou les tiges et/ou troncs de la plante.

La terre n'étant plus visible, le couvre-pot constitue un barrage aux chats et aux enfants.

Le dispositif selon l'invention protège la terre et les racines de la plante, tout en gardant l'humidité (effet de serre), empêchant tout dessèchement de la plante, ainsi que toute prolifération des mauvaises herbes et constitue une protectic n contre le gel.

Selon des modes particuliers de réalisation :

Le dispositif se présente sous forme d'un disque principalement, mais il peut être également, en fonction du type de pot, de forme carrée, rectangulaire, ovale, hexagonale, triangulaire.

Il est constitué en plusieurs matières : PVC, papier, carton, bois, linoléum, liège, tissu, film plastique, permettant aux utilisateurs une manipulation aisée, une utilisation durable dans le temps, ainsi qu'une réutilisation sur tout type de plantation.

Il est muni d'une coupe droite centrale allant de la périphérie jusqu'à 1 cm des pré découpes;

La coupe droite centrale est découpée de petites lamelles formant deux peignes de part et d'autre, et s'étalant jusqu'à des demi-étoiles à chaque extrémité ; La taille des peignes avec leurs lamelles varie en fonction du diamètre du couvre-pot.

De petites lamelles découpées formant deux demi-étoiles constituent les deux extrémités des peignes ; Leur taille varie en fonction du diamètre du couvre-pot.

A la périphérie du pot, des lamelles juxtaposées de 1 cm sont prédécoupées sur l'envers.

Le couvre-pot peut être opaque à la lumière et empêcher la prolifération des mauvaises herbes, ou bien transparent donc invisible.

Les couleurs du couvre-pot sont multiples et il peut être imprimé de différents motifs: imitation bois, pierre, terre cuite, herbe, caillou, gravier, nature fleur, de couleur unie, rouge, bleue, verte, jaune, noire, blanc... .Il peut être posé à plat sur la terre, ou bien en position conique.

Pour les plantes à plusieurs troncs, l'utilisateur peut se servir d'une paire de ciseaux et effectuer une ou des coupes supplémentaires.

Les dessins annexés illustrent l'invention.

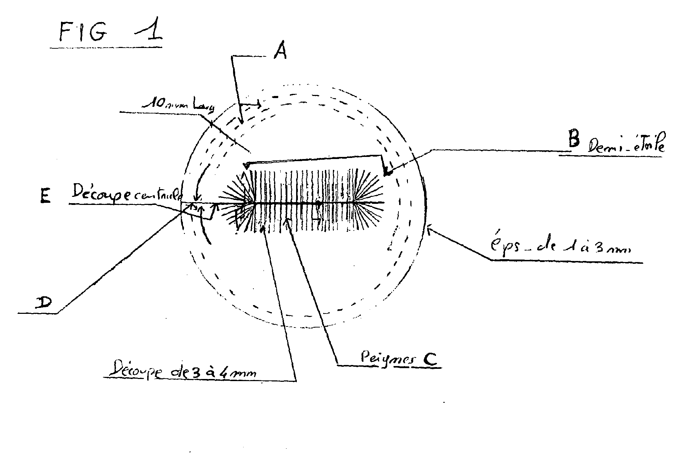

La figure 1 représente le dispositif de l'invention.
La figure 2 représente les différentes formes possibles.
Les figures 3 à 7 représentent les différentes étapes de mise en oeuvre.

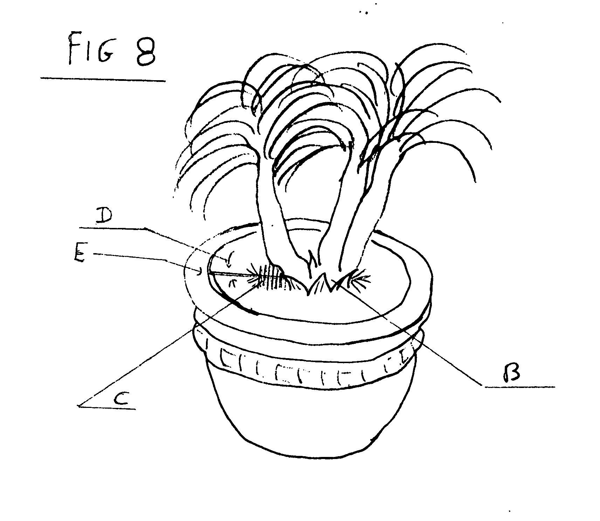

La figure 8 représente une vue finale.

Le dispositif pour recouvrir la terre en surface d'un pot à plantation est constitué principalement d'un disque mais aussi de toute forme géométrique : ovale, carré, hexagonale, triangulaire, rectangulaire, en plusieurs matériaux, opaque ou transparent, muni d'une coupe droite centrale (E) allant de la périphérie extérieure jusqu'à 1 cm de la pré découpe périphérique intérieure d'où démarre la première demi-étoile (B), suivie d' une coupe de petites lamelles formant deux peignes (C), se terminant par la deuxième demi-étoile (B) , qui elle se finit à 1 cm avant les lamelles juxtaposées de 1 cm, prédécoupées sur l'envers (A).

La taille de la coupe centrale forme deux parties symétriques (D), se chevauchant ou s'ajustant l'une contre l'autre, permettant une parfaite adaptation sur tout type de pot.

Le centre du dispositif est constitué de petites lamelles formant deux peignes (C), se finissant de part et d'autre par deux demi-étoiles découpées à 1 cm des pré découpes périphériques ; La taille des lamelles et étoiles de la coupe centrale variant en fonction du diamètre du pot.

Le tour extérieur du dispositif comporte de une à plusieurs lamelles (A) se juxtaposant, prédécoupées sur 1 cm de large, sur l'envers, qui en tirant dessus à partie de la coupe centrale, permet de s'ajuster à la taille du pot.

Toutes les pré découpes sont faites sur l'envers pour préserver la partie visible et esthétique du dessus du couvre-pot.

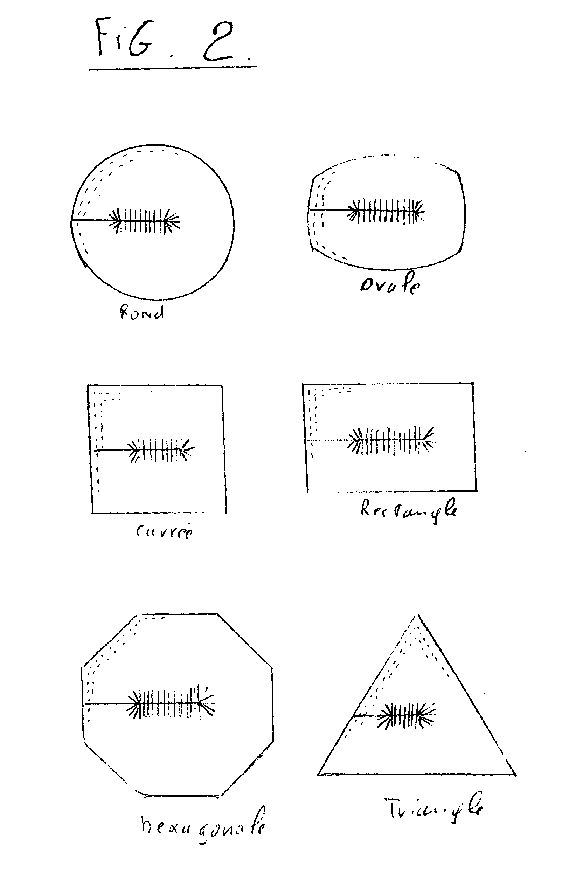

Le couvre-pot selon l'invention peut être de différentes tailles et formes géométriques lui permettant de s'ajuster sur tout type de pot (figure 2).

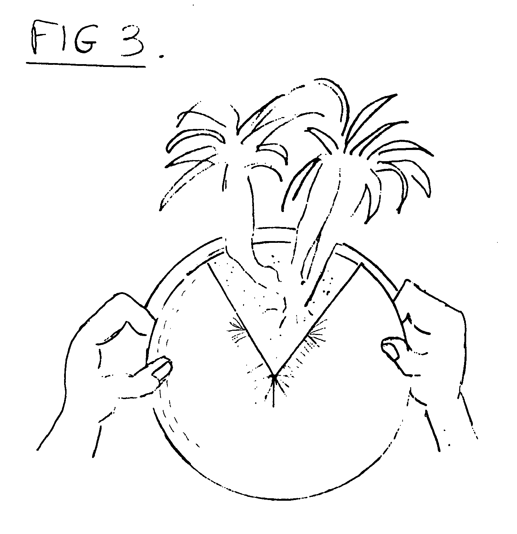

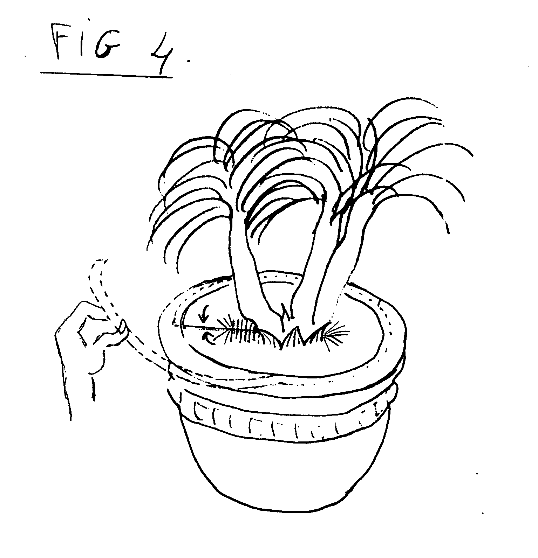

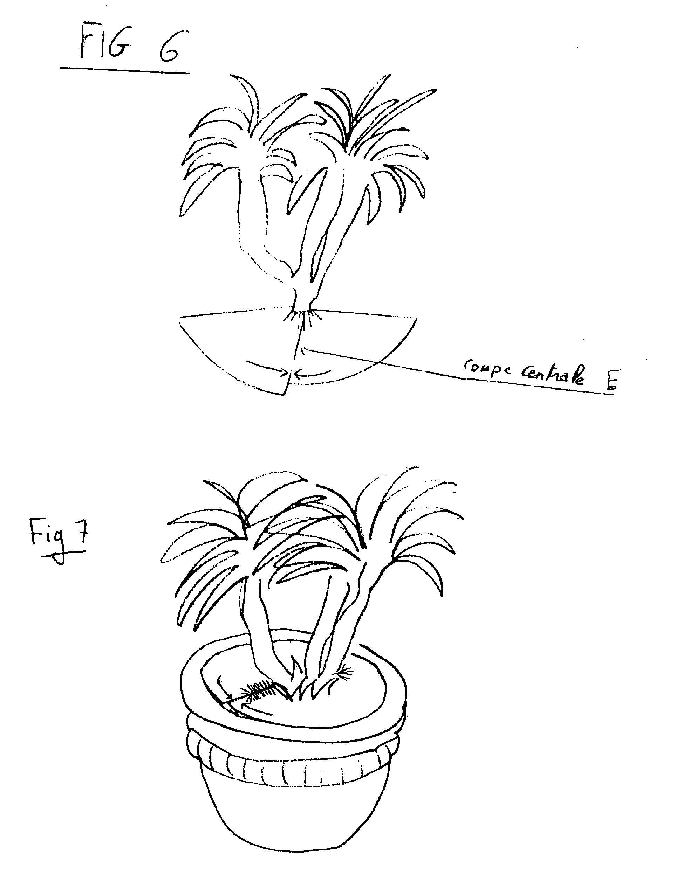

Le couvre-pot, pré découpé en deux parties, vient enrober le pied de la plante (figure 3). Pour obtenir la dimension souhaitée, il faut ôter les lamelles pré découpées sur l'envers, puis en tirant sur les extrémités du diamètre du couvre-pot (figure 4). Pour une parfaite adaptation sur tout type de pot, il faut chevaucher les deux parties de la coupe centrale, position conique, ou bien les ajuster l'une contre l'autre, position à plat (figure 6).

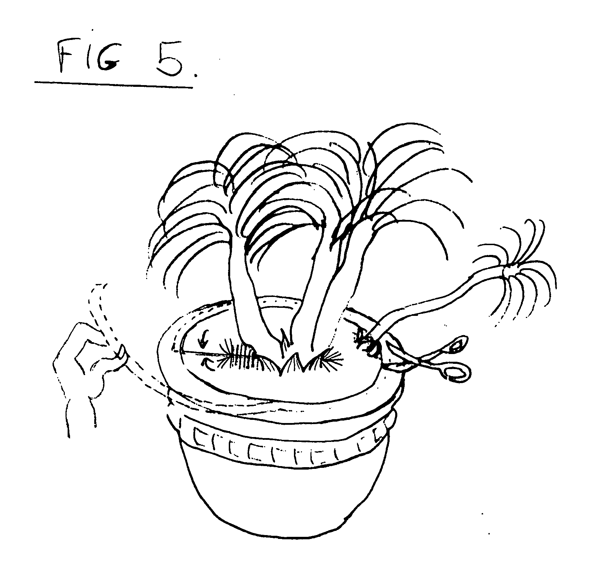

Concernant les plantes à multiples pieds/troncs, il y a la possibilité d'utiliser une paire de ciseaux pour réaliser des coupes supplémentaires (figure 5).

Le dispositif selon l'invention est particulièrement destiné à recouvrir en surface la terre des pots à plantation.

## Revendications

1. Dispositif pour recouvrir la terre en surface d'un pot à plantation **caractérisé en** un disque ou bien toute autre forme géométrique, aux couleurs et motifs illimités, opaque ou transparent, très maniable, en différents matériaux, muni d'une coupe droite centrale (E) allant de la périphérie extérieure jusqu'à 1 cm de la pré découpe périphérique intérieure d'où démarre la première demi-étoile (B), suivie d' une coupe de petites lamelles formant deux peignes (C), se terminant par la deuxième demi-étoile (B), qui elle se finit à 1 cm avant les lamelles juxtaposées de 1 cm, prédécoupées sur l'envers (A), formant le tour extérieur.

2. Dispositif selon la revendication 1 **caractérisé en ce que** le dispositif de toute autre forme géométrique, peut également être de forme ovale, carrée, hexagonale, rectangulaire, triangulaire, lui permettant de s'adapter sur tout type de pot.

3. Dispositif selon la revendication 1 ou la revendication 2 **caractérisé en ce que** la taille de la coupe centrale formant deux parties symétriques, se chevauchent ou s'ajustent l'une contre l'autre, permettant une parfaite adaptation à plat ou conique sur tout type de pot.

4. Dispositif selon l'une quelconque des revendications précédentes **caractérisé en ce que** le centre du dispositif formé d'une coupe droite centrale est découpée de petites lamelles formant deux peignes de part et d'autre, et s'étalant jusqu'à des demi-étoiles à chaque extrémité ; La taille des peignes avec leurs lamelles varie en fonction du diamètre du couvre-pot, permettant d'enrober le tronc, quel qu'il soit, de la plantation.

5. Dispositif selon la revendication 1 **caractérisé en ce que** le tour extérieur du dispositif comporte de une à plusieurs lamelles se juxtaposant, prédécoupées sur 1 cm de large, sur l'envers, qui en tirant dessus à partir de la coupe centrale, permet de s'ajuster à la taille du pot.

6. Dispositif selon la revendication 1 ou la revendication 5 consistant en ce que toutes les pré-coupes soient faites à l'envers pour préserver la partie visible et esthétique du dessus du couvre-pot.

7. Dispositif selon la revendication 1 **caractérisé en ce que** le couvre-pot est constitué en différents matériaux : PVC, papier carton, bois, linoléum, liège, tissu, film plastique, aux couleurs et motifs illimités.
